# EUROPEAN PATENT APPLICATION

(11) **EP 3 822 718 A1**
(43) Date of publication of application: **19.05.2021**
(21) Application number: 19209754.1
(22) Date of filing: 18.11.2019
(51) Int. Cl.: G05B 17/02, G05B 13/02

(54) **SYSTEM DEVICE AND METHOD OF INTEGRATED MODEL-BASED MANAGEMENT OF INDUSTRIAL ASSETS**

(71) Applicant: Siemens Aktiengesellschaft, 80333 München (DE)
(72) Inventor: Chen, Qian, Grandville, MI 49418 (US); Agrawal, Jitesh, Plymouth, MI 48170 (US)

(57) **Abstract**

System, device and method of integrated model-based management of at least one industrial asset (110) is disclosed. The method comprising, identifying relationships between at least one of asset parameters, predicted performance indicators associated with the operation of the industrial asset (110) using a physics-based model (220) of the industrial asset (110); defining new relationships between the asset parameters and the predicted performance indicators using a data-based model (230) of measured data from the operation of the industrial asset (110); validating the new relationships using the physics-based model (220); and managing further operation of the industrial asset (110) based on the validated new relationships.

## Description

The present invention relates to integrated model-based management of at least one industrial asset. Specifically, the present invention relates to predictive and diagnostic analysis of the industrial assets.

Model-based management is a method that uses modeling to perform the analysis and capture and communicate the results. It is based on the development of a model that represents the physics of an industrial asset and then simulate the model to predict the behaviors of the industrial assets.

Model-based management may be used to facilitate predictive and diagnostic analysis of the industrial assets. Such model-based management may benefit from improvements.

The present invention relates to a system, device and a method of integrated model-based management of at least one industrial asset.

In one example, a method for integrated model-based management of at least one industrial asset is disclosed. The method includes identifying relationships between at least one of asset parameters, predicted performance indicators associated with the operation of the industrial asset using a physics-based model of the industrial asset; defining new relationships between the asset parameters and the predicted performance indicators using a data-based model of measured data from the operation of the industrial asset; validating the new relationships using the physics-based model; and managing further operation of the industrial asset based on the validated new relationships.

In an embodiment, the physics-based model and the data-based model are configured to interact with each other using an asset datastructure. The asset datastructure structures the functions, information about the industrial asset separate from an application specific interpretation by the physics-based model or the data-based model. For example, the asset datastructure includes multiple fields, such as application programming interfaces for the applications associated with the physics-based model and the data-based model. Further, the asset datastructure may include policies to determine the extent of access to the industrial asset. Furthermore, the asset datastructure may include the asset parameters and the predicted performance indicators. Additionally, the asset datastructure may indicate information related to logistics and organization associated with the asset. A person skilled in the art would understand that the asset datastructure is a mapping of the asset parameters and in an example could be referred as input/output variable. The asset datastructure advantageously enables interoperability between the applications associated with the physics-based model and the data-based model. Further, interoperability across computing environments may also be achieved using the asset datastructure.

Example asset parameters may include vibration, temperature, current, magnetic flux, velocity, power, etc. A person skilled in the art will appreciate that the asset parameters are not limited to the above-mentioned examples and may be based on the industrial asset.

Example performance indicators include energy consumption of the industrial asset, frequency of maintenance operation, latest failure, predicted failure, predicted remaining useful life, predicted reliability and predicted availability of the industrial asset. The performance indicators may be predicted by the physics-based model using physical constraints associated with the industrial asset.

The present invention advantageously enables closed loop control of assets through the integration of data-based model with physics-based model. Comprehensive analysis of the asset parameters is achieved by the data-based model that uses machine learning algorithms to enhance results of the physics-based model. As used herein "integrated" refers to the interplay between the data-based model and the physics-based model. The sharing of insights to enhance performance of the respective models enables highly reliable control decisions. The method may be implemented in a system or in a device.

In another example, a system for integrated model-based management of at least one industrial asset is disclosed. The system includes an Internet of Things (IoT) platform configured to host at least one asset monitoring and diagnostic application; and a server communicatively coupled to the IoT platform, wherein the server comprises a firmware module comprising: a learning module, wherein the learning module is configured to: identify relationships between at least one of asset parameters, predicted performance indicators associated with the operation of the industrial asset using a physics-based model of the industrial asset, and define new relationships between the asset parameters, the predicted performance indicators using a data-based model of measured data from the operation of the industrial asset; and a validation module configured to validate the new relationships using the physics-based model whereby the asset monitoring and diagnostic application is configured to initiate further operation of the industrial asset based on the validated new relationships.

As used herein IoT platform refers to a computing platform configured to provide a service for analyzing condition data of the assets. The IoT platform may be configured on a cloud computing platform or a fog computing platform.

As used herein, "cloud computing" refers to a processing environment comprising configurable computing physical and logical re-sources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

As used herein "fog computing" refers to a processing environment comprising configurable computing physical and logical resources within an industrial network. The physical and logical resources may be referred to edge devices. The edge devices may be light weight, low cost devices which collect data from various sensors and actuators deployed in a plant, store and buffer the collected data, conduct analysis of the collected data, and perform an action (e.g., issuing a control command) based on the outcome of analysis. The edge devices may also be configured to aggregate, filter, selectively report, compress, encrypt, and/or otherwise pre-process the plant data, resulting in less data and/or value added data being communicated to the cloud platform.

In yet another example, a device for integrated model-based management of at least one industrial asset is disclosed. The device comprises at least one processing unit or environment; and a memory unit communicatively coupled to the at least one processor, wherein the memory unit comprises an asset monitoring and diagnostic application stored in the form of machine-readable instructions, wherein the asset monitoring and diagnostic application configured to enable performance, and preferably perform, the method steps disclosed herein, when executed by the at least one processor.

In an embodiment, the device is a gateway device configured to communicate with the industrial asset and a cloud computing platform. The gateway device is configured to pre-process the measured data from the industrial asset using the physics-based model. Accordingly, only relevant datapoints are analyzed by the data-based model. The device may include a firmware module with a learning module to generate the data-based model. The learning module is configured to extract the relationships from the physics-based model that is generated by a simulation unit communicatively coupled to the cloud computing platform.

In another example, a computer-program product having machine-readable instructions stored therein, which when executed by one or more processing units, cause the processing units to perform the method disclosed herein.

The method, system, device and computer-program product advantageously combine the insights of the physics-based model with artificial intelligence. Further, the manner of the combination enables to bring out the strengths of both the physics-based model and the data-based model.

In an embodiment, the physics-based model of the industrial asset is generated. For example, the system includes a simulation unit configured to generate the physics-based model. The physics-based model may include asset identification, a related assembly associated with the industrial asset, operating conditions associated with the industrial asset, the asset parameters and the relationship between the asset parameters and the predicted performance indicators. For example, the physics-based model includes 1 Dimensional (D) representation, 3D representation, process and instrumentation representation, associated with the asset. The physics-based model may further include dynamics of the industrial asset, representation of mechanical functions with electronics and controls, materials and manufacturing methods. Further, the physics-based model may be simulated to predict the behaviors of the system. Therefore, it advantageously replicates the physical interactions including chemical conditions that constitute the industrial asset and enable in the operation of the industrial asset.

In an embodiment, the data-based model of the industrial asset is generated. The learning module is configured to generate the data-based model including the new relationships. For example, the data-based model is generated by analyzing at least one of the measured data, historical operation data and synthesized data associated with the industrial asset using one or more data-science/machine learning algorithms such as pattern recognition algorithms. The measured data refers to values of the asset parameters measured by sensing and monitoring units. The measured data may be analyzed in real-time using the machine learning algorithms. Further, the historical operation data refers to the measured data that was measured at a lapsed time instant. Furthermore, the synthesized data includes data that is generated based on the measured data or the historical operation data.

In an embodiment, the learning module comprises the one or more machine learning algorithms. The usage of machine learning algorithms with the measured data from the IoT platform enables complicated analysis such as pattern recognition. Advantageously, the machine learning algorithm identifies the behaviors/patterns of the industrial asset using the physics-based model while processing of a large amount of the historical operation data and/or the synthesized data.

In an embodiment, datapoints in the measured data, the historical operation data and/or the synthesized data are identified. The datapoints may be required for the data-based model using the relationship between the asset parameters and the predicted performance indicators in the physics-based model. For example, the behaviors/patterns are identified by identifying datapoints in the measured data, the historical operation data or the synthesized data. The identification is made based on the relationships in the physics-based model. Further, model parameters of the data-based model are trained using the datapoints.

Based on this learning, further insights of the industrial asset may be generated. In an embodiment, the new relationships between the asset parameters may be determined. Alternatively, the new relationships between the predicted performance indicators may be determined. In another alternative embodiment, the new relationships between the asset parameters and the predicted performance indicators may be determined. Furthermore, the industrial asset's behavior/pattern may be used to predict or diagnose problems. The machine learning algorithms are capable of analyzing the measured data with speed and accuracy based on the manner of the combination with the physics-based model.

In an embodiment, the new relationships are determined when the datapoints are definable as a function of one or more asset parameters and/or predicted performance indicators in addition to existing functions defined using the relationships in the physics-based model. Accordingly, the present invention enhances the insights that can be drawn from the physics-based model using the data-based model.

The new relationships may be validated to ensure that the industrial asset is operated suitably. In an embodiment, the validation is performed by calibrating the relationships between the asset parameters and the predicted performance indicators using the new relationships. For example, calibration includes modifying coefficients of the existing functions to reflect the new relationships. Further, validation includes simulating operation of the industrial asset using the updated physics-based model. The simulation may be used to recalibrate the relationships and thereby initiate updation the physics-based model.

In an embodiment, the physics-based model is updated based on the recalibrated relationships. The updated physics-based model may be used to determine further operation of the industrial asset. For example, predicting at least one anomaly associated with the industrial asset based on the updated physics-based model and/or the data-based model. As used herein, anomaly includes unplanned deviations or degradation in performance of the industrial assets. Further, the updated physics-based model may be used for determining the root cause of the anomaly using the updated physics-based model; and identifying one or more components in the industrial asset associated with the cause. In an embodiment, a Graphical User Interface (GUI) may be used to display the predicted condition of the industrial asset and display the anomaly and the cause.

To support effective prediction and operation in every stage of product design, production and operation of the industrial asset, different modeling techniques are used. Model-based data analysis is advantageous for the closed-loop control of the industrial asset. For example, the measured data during the operation stage of industrial asset can be fed back to improve the physics-based model created in the product design phase.

In an embodiment, the integrated model-based management is achieved by predicting operation of the industrial asset based on the updated physics-based model and/or the data-based model. Further, by predicting at least one anomaly associated with the industrial asset based on the predicted operation using the data-based model. Furthermore, by determining cause of the anomaly using the updated physics-based model. In an embodiment, one or more components in the industrial asset are identified to be associated with the cause using the updated physics-based model. The operation of the industrial asset may be modified or maintained (broadly referred as managed) based on the cause and the identified components.

The typical use cases of closed-loop control may include:
i. Product design improvement and model calibration (closed-loop engineering)
   Design engineer used the feedback of the measured data from real-time operation of the industrial asset to improve the design and calibrate the physics-based model. For example, the parameters can be calibrated based on the worn condition of a specific machine.
ii. Virtual sensor
   Operation engineer may use the physics-based model with the inputs of real-time measured data to calculate the value of asset parameters (virtual sensor) that is impossible or difficult to measure directly. For example, the torque of an engine can be calculated based on measured velocity.
iii. Product condition monitoring
   Operation engineer may further use virtual sensors to monitor the asset parameters of the industrial asset during its operation to have a better insight of the product condition. For example, Engineer can monitor the internal temperature of a turbine to determine its health.
iv. Product diagnostics
   Operation engineer may use the physics-based model to simulate the system behavior with the inputs of real-time measured data and then analyzed the simulation to diagnose product failures. For example, the simulation of an Engine physics-based model with real-time input of Engine speed can clearly identify which cylinder is misfiring.
v. Optimization of operation performance
   Operation engineer may use the insights gained from the product condition monitoring and diagnostics to better control the product operation and optimize the performance of the industrial asset. For example, the driving mode of a vehicle can be adjusted to fit the detected road condition.
vi. Predictive maintenance
   Service engineer may use various analysis techniques to predict the condition of the product and its key components. Maintenance can be scheduled based on the prediction before the actual failure occurs.

The above-mentioned method is discussed further in relation to a wind turbine as the industrial asset. The specific use case considered is example of estimation of Remaining Useful Life (RUL). Wind turbine maintenance may be exceptionally challenging as the turbines have an expected lifetime of 20 years, while the actual lifetime of a gearbox is significantly shorter. Wind farm owners need to be able to predict the RUL of their gearboxes, in order to safeguard functional performance, optimize maintenance planning and reduce cost.

Using cloud computing, the operator can access a large amount of data of various parameters of an operating wind turbine, for example, the wind speed, turbine speed, temperature, etc. However, it is not effective to apply a blind analysis, for example, machine learning, of this big amount of data. First, it requires a large amount of historical data of wind turbine failures to identify the key variables related to the failures. Secondly, when the failure is predicted, it is difficult to pinpoint the root cause of the failure.

Therefore, an integrated physics-based model and data-based model are applied together with the measured data to predict the RUL of the wind turbine and the gearbox. A simulation unit may be used to provide a combination profile of 1D and 3D representation of the wind turbine. In an example, the physics-based model includes the combined kinematic-dynamic of the entire turbine including the gearbox. In an embodiment, the physics-based model may be generated for a fleet of wind turbines. The parameters of the model can be calibrated to represent each individual turbine with consideration of its specific conditions. Using the physics-based model, the loads on the gearbox components can be calculated for one or more wind load conditions (stationary and transient) of specific wind turbine.

As discussed above, the key advantage of the combination of the physics-based model and the data-based model is that it allows the user to include known knowledge and physics of the system in the analysis. In this example, the analysis utilizes the following:
Complete knowledge of the wind loads the turbine has experienced can be leveraged by the data-based model through simulating the physics-based model.

Physics-based model is able to link wind loads to gearbox component loads (forces, torques) and uses knowledge of the components to translate loads into damage of the components.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- FIG 1: illustrates a system for integrated model-based management of an industrial asset, according to an embodiment of the present invention;
- FIG 2: illustrates a method of operation of the system in FIG 1;
- FIG 3: illustrates an asset datastructure used in the system in FIG 1; and
- FIG 4: illustrates a method for integrated model-based management of an industrial asset, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

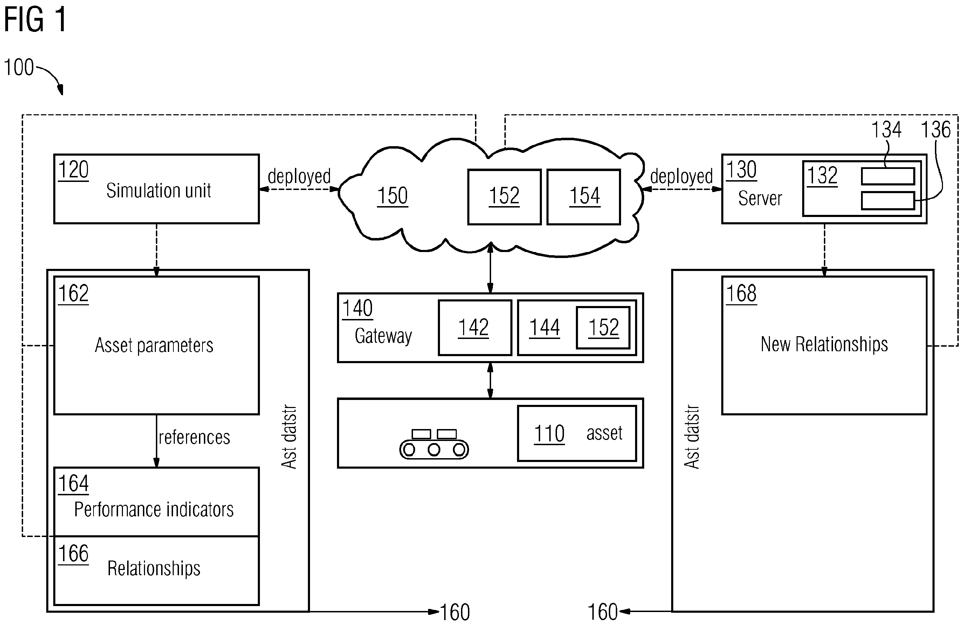

FIG 1 illustrates a system 100 for integrated model-based management of an industrial asset 110, according to an embodiment of the present invention. The system 100 includes an Internet of Things (IoT) platform 150 configured to host at least one asset monitoring and diagnostic application 152. The IoT platform 150 also includes a database 154 that comprises historical operation data associated with the asset 110.

The IoT platform 150 may be communicatively coupled directly to the asset 110 or via a gateway device 140. In an embodiment, the gateway device 140 may also be configured to execute the application 152.

The system 100 also includes a learning unit 130 communicatively coupled to the IoT platform 150. The learning unit 130 comprises a firmware module 132 comprising machine readable instruction stored as modules such as a learning module 134 and a validation module 136.

Further, the system 100 may include a simulation unit 120 communicatively coupled to the IoT platform 150. The simulation unit 120 includes at least one of Computer aided design (CAD), computer-aided manufacturing (CAM), computer-aided engineering (CAE), visualization, simulation, and manufacturing systems, product data management (PDM) systems, a product lifecycle management (PLM) system, an engineering system and a manufacturing operation management (MOM) system.

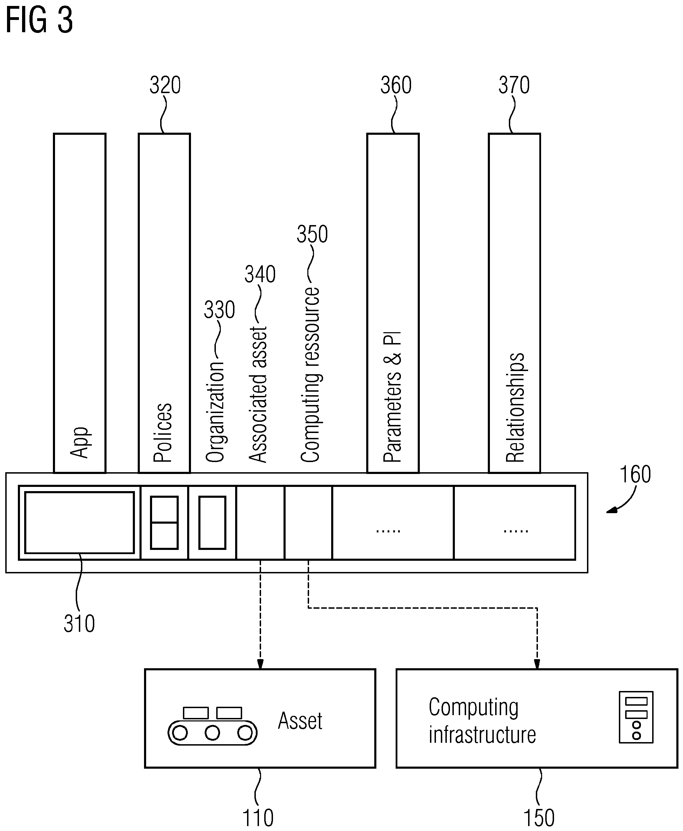

The simulation unit 120 and the learning unit 130 exchange information about the asset 110 using an asset datastructure 160. The asset datastructure 160 may include multiple fields that are access based on an application accessing information of the asset 110. These fields may include asset parameters 162, performance indicators 164 and relationship 166. The details of the asset datastructure is disclosed in FIG 3.

In operation the learning module 134 is configured to identify relationships between at least one of asset parameters, predicted performance indicators associated with the operation of the industrial asset using a physics-based model of the industrial asset. Further, the learning module 134 is configured to define new relationships 168 between the asset parameters, the predicted performance indicators using a data-based model of measured data from the operation of the industrial asset. The validation module 136 is configured to initiate validation of the new relationships 168 using the physics-based model. The asset monitoring and diagnostic application 152 is configured to initiate further operation of the asset 110 based on the validated new relationships.

The physics-based model is generated by the simulation unit 120. The physics-based model is used to ensure that the learning module 134 analyzes limited datapoints of the historical operation data of the asset 110 for the training of the data-based model. This is enabled by the simulation unit 120 that generates the physics-based model to include asset identification, a related assembly associated with the asset 110, operating conditions associated with the asset 110, the asset parameters 162, predicted performance indicators 164 and relationships between the asset parameters 162, between the asset parameters 162 and the performance indicators 164.

The relationships 166 may be updated based on the data-based model that identifies new relationships between the asset parameters 162 and the performance indicators 164. The update is condition to the validation of the new relationships 168. For example, the new relationships 168 are simulated using the physics-based model by recalibrating the relationships 166.

In an embodiment, the system 100 may include a display device with a Graphical User Interface (GUI) or one or more wearable devices. The display may be configured to render a holographic view of the industrial asset 110. A hologram is a photographic recording of a light field that is used to display a multi-dimensional image of industrial asset 110. The holographic view of the portion of the asset 110 is coupled information related to predicted condition and probable anomaly.

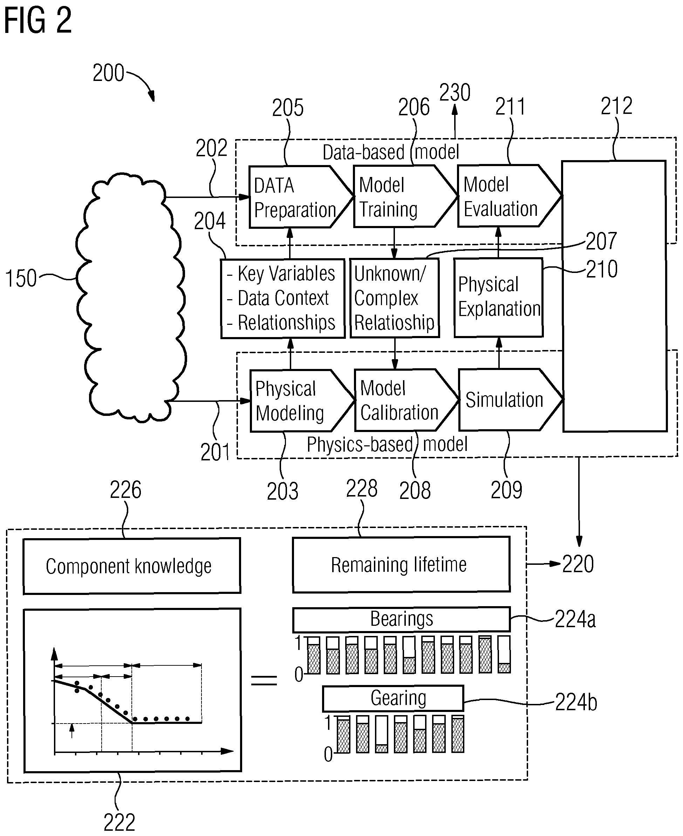

FIG 2 illustrates a method 200 of operation of the system 100. In runtime, the method 200 typically begins with the step 202 by receiving the measured data associated with the operation of the asset 110. The measured data is input to the learning module 134 to generate the data-based model 230. The measured data is received via the IoT platform 150.

In certain embodiments, the method 200 begins with step 201 by receiving lifecycle data associated with the asset 110. The lifecycle data includes data associated with the design, manufacture, testing, operation and maintenance of the asset 110. In an embodiment, the lifecycle data of industrial assets similar to the asset 110 is received. The lifecycle data may be stored in the database 154 and is received via the IoT platform 150.

At step 203, an instance of the physics-based model 230 is generated. The physics-based model 220 is not frozen and may be modified based on the measured data or the historical operation data of the asset 110. The physics-based model 230 may include multiple representations of the asset 110.

For example, the physics-based model 220 may include a stress-failure curve 222 with a relationship of cycles to failure and stress. Based on the asset 110 the stress-failure curve 222 may be used to predict condition of the asset 110 or its components. For example, FIG 2 relates to a rotating machine, the physics-based model 220 may include prediction of bearing condition 224a and gear condition 224b in the rotating machine. In addition, the physics-based model 220 may include component parameters 226 and remaining useful life 228 of the components and the asset 110. Accordingly, the physics-based model 230 may be considered to include the asset parameters/component parameters, performance indicators such as cycles to failure/remaining useful life and relationships between the asset parameters and the performance indicators.

At step 204, the asset parameters and the relationships are extracted from the physics-based model 220. For example, the brake events in the asset 110 (rotating machine) are converted to gearbox load which may be used for the calculation of the remaining life 228. At step 205, the physics-based model is used to prepare the data-based model 230. During preparation of the data-based model 230, a machine learning algorithm can leverage asset parameters and the relationships are extracted from the physics-based model 220. Without this insight, a large amount of historical operation data is required by typical machine learning algorithm to determine the relationships. Further, it may help to improve the accuracy and efficiency of the machine learning algorithm.

At step 206, the machine learning algorithm can reveal certain behaviors of the industrial asset, which are unknown to the physics-based model 220. These behaviors are referred as the new relationships. At step 207, the new relationships are fed back to the physics-based model 220 for validation and update of the physics-based model 220. For example, considering the rotating machine as the asset 110, a manufacturer of the gearbox identified relationships between the material properties of rotating gearbox components and load. With these relationships, the mechanical loading of the gearbox can be translated into component damage', leading to RUL estimation for all rotating gearbox components using the data-based model.

At step 208, the physics-based model 220 is calibrated based on the new relationships. Calibration refers to modifying the existing functions of the relationships in the physics-based model 220 based on the new relationships. The calibration is tested by simulation at step 209. At step 209, multiple instances of the physics-based model 220 may be generated to simulate operation of the asset 110 based on the calibration.

At step 210, the instances may be analyzed to determine a physical explanation. Therefore, the new relationships are validated based on the physics-based model 220. At step 211, the data-based model 230 is considered as trained and ready to analyze the measured data received at step 202. In addition, the physics-based model 220 is updated based on the validated new relationships.

At step 212, further operation of the asset 110 is determined based on the updated physics-based model and the trained data-based model. The further operation may include detection of anomaly in the operation of the asset 110 and further analysis of the cause of the anomaly. For example, the cause may be used to identify the component causing the anomaly and which asset parameter to vary to avoid the anomaly.

FIG 3 illustrates asset datastructure 160 used in the system 100. The asset datastructure 160 is used to enable the combination of the physics-based model and the data-based model. The asset datastructure 160 of the industrial asset 110 can be used for communication across one or more applications.

To guarantee effective communication between the applications, fields 310-370 are defined in the asset datastructure 160 with specific connotation. Field 310 relates to applications/services/instructions that are executable based on the information provided in the asset datastructure 160. For example, the applications may include Computer aided design (CAD), computer-aided manufacturing (CAM), computer-aided engineering (CAE), visualization, and simulation, used to generate the physics-based model. In another example, the instructions may be associated with the operation of the machine learning algorithms used to data-based model. The field 310 is used to define the applications that are associated with the asset 110.

The applications may have differing access to the information associated with the asset 110. Accordingly, policy field 320 determines the access and control policies that are used to protect the extent to which information related to the asset 110 is exposed.

Organization field 330 is used to track the organization responsible for the asset 110 and/or the applications that operate based on the information associated with the asset 110. This is an optional field if the provider of the asset 110 and the applications are the same organization. In certain embodiments, the asset 110 may be manufactured by a separate organization and operated in another. In such cases, the organizations associated with the asset 110 are indicated in the field 330.

The asset datastructure 160 includes an asset field 340. The asset field 340 serves as an identifier of the asset 110. This may be used to determine assets with similar function and operation history such that relevant fleet data may be used to generate the data-based model. Further, operation details of the asset 110 may be provided in a standardized format in field 360 and 370. In an embodiment, field 360 includes the asset parameters and predicted performance indicators. Field 370 may include the relationships that are determined by the physics-based model and the new relationships that are determined by the data-based model.

The asset datastructure 160 also includes a reference to a computing resource of the IoT platform 150 on which the application in field 310 may be deployed. The asset datastructure 160 can include a change flag to indicate one or more contents of the fields 310-370 have been changed.

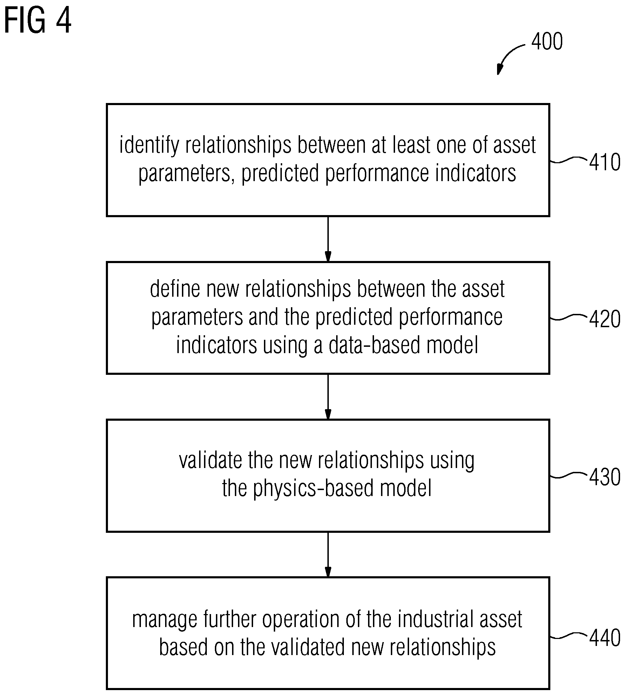

FIG 4 illustrates a method 400 for integrated model-based management of an industrial asset, according to an embodiment of the present invention.

The method 400 begins at step 410 with identifying relationships between at least one of asset parameters, predicted performance indicators associated with the operation of the industrial asset using a physics-based model of the industrial asset. In an embodiment, the physics-based model is generated at step 410. Accordingly, at step 410, the physics-based model of the industrial asset is generated to include asset identification, a related assembly associated with the industrial asset, operating conditions associated with the industrial asset, the asset parameters and the relationship between the asset parameters and the predicted performance indicators

Further, at step 410, datapoints in measured data, historical operation data and/or synthesized data are identified using the relationship between the asset parameters and the predicted performance indicators in the physics-based model. The datapoints are required for generation of the data-based model. In an embodiment, the datapoints are used for training model parameters of a data-based model.

At step 420, new relationships between the asset parameters and the predicted performance indicators are defined using the data-based model of the measured data from the operation of the industrial asset. For example, the new relationships may be determined when the datapoints in the measured data, the historical operation data and/or the synthesized data are definable as a function of one or more asset parameters and/or predicted performance indicators in addition to existing functions defined using the relationships in the physics-based model.

Further, at step 420, the data-based model of the industrial asset is generated. The data-based model may include the new relationships that are determined using one or more machine learning algorithms.

At step 430, the new relationships are validated using the physics-based model. Validation of the new relationship includes the steps of calibrating the relationships between the asset parameters and the predicted performance indicators using the new relationships, to update the physics-based model. Further, at step 430, operation of the industrial asset is simulated using the updated physics-based model to determine a physical explanation for the new relationships. In certain embodiments, the relationships may be recalibrated based on the simulation and thereby updating the physics-based model.

At step 440, further operation of the industrial asset is managed based on the updated physics-based model and/or the data-based model. Management of further operation may include predicting operation of the industrial asset based on the updated physics-based model and/or the data-based model.

In certain embodiments, managing further operation may include predicting at least one anomaly associated with the industrial asset based on the predicted operation using the data-based model. In addition to predicting the anomaly, the step 440 may also include determining cause of the anomaly using the updated physics-based model. Further, one or more components in the industrial asset associated with the cause may be identified using the updated physics-based model.

The method 400 discloses an integrated model-based management of the industrial asset with integration of physics-based model and data-based model. The advantage of the integration is that new patters and relationships may be identified using machine learning algorithms and abnormal conditions/anomalies of the industrial asset can be not only detected but also diagnosed to pinpoint the root cause of the anomaly.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or de-vice) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus/device claims.

## Claims

1. A method of integrated model-based management of at least one industrial asset (110), the method comprising, through the operation of at least one processor (142):
identifying relationships between at least one of asset parameters, predicted performance indicators associated with the operation of the industrial asset (110) using a physics-based model (220) of the industrial asset (110);
defining new relationships between the asset parameters and the predicted performance indicators using a data-based model (230) of measured data from the operation of the industrial asset (110);
validating the new relationships using the physics-based model (220); and
managing further operation of the industrial asset (110) based on the validated new relationships.

2. The method according to the preceding claim, further comprising:
generating the physics-based model (220) of the industrial asset (110) including asset identification, a related assembly associated with the industrial asset (110),
operating conditions associated with the industrial asset (110), the asset parameters and the relationship between the asset parameters and the predicted performance indicators; and
generating the data-based model (230) of the industrial asset (110) including the new relationships by analyzing at least one of the measured data, historical operation data and synthesized data associated with the industrial asset (110) using one or more machine learning algorithms.

3. The method according to one of the preceding claims, wherein identifying relationships between asset parameters and predicted performance indicators comprises:
identifying datapoints in one of the measured data, the historical operation data and the synthesized data, which are required for the data-based model (230) using the relationship between the asset parameters and the predicted performance indicators in the physics-based model (220);
training model parameters of the data-based model (230) using the datapoints.

4. The method according to one of the preceding claims, wherein defining new relationships between the asset parameters and the predicted performance indicators comprises:
determining the new relationships when the datapoints are definable as a function of one or more asset parameters and/or predicted performance indicators in addition to existing functions defined using the relationships in the physics-based model (220).

5. The method according to one of the preceding claims, wherein validating the new relationships using the physics-based model (220) comprises:
calibrating the relationships between the asset parameters and the predicted performance indicators using the new relationships, to update the physics-based model (220);
simulating operation of the industrial asset (110) using the updated physics-based model (220);
recalibrating the relationships based on the simulation; and
updating the physics-based model (220) based on the recalibrated relationships.

6. The method according to one of the preceding claims, further comprising:
predicting operation of the industrial asset (110) based on at least one of the updated physics-based model (220) and the data-based model (230);
predicting at least one anomaly associated with the industrial asset (110) based on the predicted operation using the data-based model (230);
determining cause of the anomaly using the updated physics-based model (220); and
identifying one or more components in the industrial asset (110) associated with the cause using the updated physics-based model (220) .

7. A system for integrated model-based management of at least one industrial asset (110), the system comprising:
an Internet of Things (IoT) platform (150) configured to host at least one asset monitoring and diagnostic application; and
a learning unit (130) communicatively coupled to the IoT platform (150), wherein the server comprises a firmware module comprising:
a learning module (134), wherein the learning module (134) is configured to:
identify relationships between at least one of asset parameters, predicted performance indicators associated with the operation of the industrial asset (110) using a physics-based model (220) of the industrial asset (110), and
define new relationships between the asset parameters, the predicted performance indicators using a data-based model (230) of measured data from the operation of the industrial asset (110); and
a validation module (136) configured to validate the new relationships using the physics-based model (220) whereby the asset monitoring and diagnostic application is configured to initiate further operation of the industrial asset (110) based on the validated new relationships.

8. The system according to claim 7, further comprises:
a simulation unit (120) communicatively coupled to the IoT platform (150) configured to:
generate the physics-based model (220) including asset identification, a related assembly associated with the industrial asset (110), operating conditions associated with the industrial asset (110), the asset parameters and the relationship between the asset parameters and the predicted performance indicators;
calibrate the relationships between the asset parameters and the predicted performance indicators using the new relationships;
simulating operation of the industrial asset (110) using the updated physics-based model (220); and
recalibrating the relationships based on the simulation and one or more predefined conditions; and
updating the physics-based model (220) based on the recalibrated relationships.

9. The system according to one of the claims 7 and 8, wherein the asset monitoring and diagnostic application is configured to determine cause of the anomaly using the updated physics-based model (220), and identify component in the asset associated with the cause using the updated physics-based model (220).

10. A device for integrated model-based management of at least one industrial asset (110), the device comprising:
at least one processor (142); and
a memory unit (144) communicatively coupled to the at least one processor (142), wherein the memory unit (144) comprises an asset monitoring and diagnostic application (152) stored in the form of machine-readable instructions, wherein the asset monitoring and diagnostic application configured to enable performance, and preferably perform, the method steps in at least one of claims 1-6, when executed by the at least one processor (142).

11. A computer-program product having machine-readable instructions stored therein, which when executed by one or more processing units, cause the processing units to perform a method according to claims 1 to 6.
